(19) Europäisches Patentamt
European Patent Office
Office européen des brevets

(11) **EP 4 607 820 A1**

(12) **EUROPEAN PATENT APPLICATION**

(43) Date of publication:
**27.08.2025   Bulletin 2025/35**

(21) Application number: **24158819.3**

(22) Date of filing: **21.02.2024**

(51) International Patent Classification (IPC):
***H04B 10/071*** (2013.01)      ***G01M 11/00*** (2006.01)

(52) Cooperative Patent Classification (CPC):
**H04B 10/071; G01M 11/3109**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **Adtran Networks SE
98617 Meiningen (DE)**

(72) Inventors:
• **Rapp, Lutz
98617 Meiningen (DE)**
• **Azendorf, Florian
98617 Meiningen (DE)**

(74) Representative: **Eder Schieschke & Partner mbB
Patentanwälte
Elisabethstraße 34
80796 München (DE)**

(54) **METHOD FOR FAULT LOCALIZATION IN AN OPTICAL NETWORK**

(57)    The present invention relates to a method for fault localization in an optical network, wherein the optical network includes at least one span, and wherein an optical signal travels through the at least one span, wherein each of the at least one span has associated amplifiers, wherein the associated amplifiers are connected to launch optical signals into a remainder of a corresponding optical transmission line, wherein the method (1) comprises the steps of:

- for each span, respectively acquiring reflected signals generated by the optical signal travelling through the span by at least one power monitoring device (2); and
- for each span, determining whether there is a fault in the corresponding span based on the corresponding acquired reflected signals, wherein, if there is a fault in the corresponding span, localization of the fault is determined based on the corresponding acquired reflected signals (3).

FIG. 1

```
        ┌──────────────┐
        │    START     │                 1
        └──────┬───────┘
               │                          2
        ┌──────▼────────────────────┐
        │ ACQUIRING REFLECTED SIGNALS│
        └──────┬────────────────────┘
               │                          5
        ┌──────▼────────────────────┐
        │ SEPARATING REFLECTED SIGNALS FROM │
        │        OPTICAL SIGNAL       │
        └──────┬────────────────────┘
               │                          4
        ┌──────▼────────────────────┐
        │ REDUCING IMPACT OF REFLECTIONS │
        │        BEFORE THE SPAN      │
        └──────┬────────────────────┘
               │                          3
        ┌──────▼────────────────────┐
        │ DETERMINE WHETHER THERE IS A FAULT AND, IF │
        │ THERE IS A FAULT, LOCALIZATION OF THE FAULT │
        │ BASED ON THE ACQUIRED REFLECTIONS │
        └────────────────────────────┘
```

EP 4 607 820 A1

**Description**

The present invention relates to a method for fault localization in an optical network, with which the localization of faults in an optical fiber network including at least one span can be determined accurately at low costs.

In long-haul optical communication systems, in particular optical fiber networks including at least one span, for example optical meshed networks, it is required to monitor the health of the system. This is of particular importance if the used fibers cannot be directly inspected visually, which is the typical case. Therefore, detecting faults, such as fiber breaks, is of major importance. Thereby, fast localization of a fault is required to meet the guaranteed availability of services provided over the optical fiber network.

Known monitoring methods include the use of optical time domain reflectometers (OTDR). An optical time domain reflectometer is an optoelectronic instrument used to characterize an optical fiber and is configured to inject in its simplest embodiment a single optical pulse into the fiber under test and to extract, from the same end of the fiber, light that is scattered or reflected back from points along the fiber. The scattered or reflected signal that is acquired and recorded by the instrument is then used to characterize the optical fiber.

Equipping optical fiber networks at each network element with additional optical time domain reflectometers enables automatic localization of faults within the spans of the optical fiber network. However, installing such optical time domain reflectometers is quite expensive.

US 10,142,016 B2 discloses techniques for providing high-resolution, standard-format output for line monitoring equipment (LME) of a wavelength division multiplexing (WDM) communication system, wherein the LME may transmit a plurality of LME test signals via an optical path of the WDM system and may perform gain measurements on reflections associated with the same at predetermined intervals. Gain measurements for each of the plurality of LME test signals may be normalized and filtered to derive LME peak data. The WDM communication system may perform full scans with data points totalling millions/billions (e.g., depending on system length, fiber type, and number of transmitted LME test signals or test pulses) and normalize the same into a relatively small number of resulting data points within the LME peak data. The WDM system may then output an LME results file in a standard format which is compatible with commercial viewers and optical time domain reflectometer (OTDR) equipment. However, implementing these techniques comes with increased complexity.

Therefore, there is a need for an improved method for fault localization in an optical network.

This object is achieved by the method for fault localization in an optical network according to claim 1.

This object is further achieved by the system for fault localization in an optical network according to claim 7.

According to one embodiment of the invention, a method for fault localization in an optical network is provided, wherein the optical network includes at least one span, and wherein an optical signal travels through the at least one span, wherein each span has associated amplifiers, wherein the associated amplifiers are connected to launch optical signals into a remainder of a corresponding optical transmission line, wherein the method comprises, for each span, respectively acquiring reflected signals generated by the optical signal travelling through the span by at least one power monitoring device, and, for each span, determining whether there is a fault in the corresponding span based on the corresponding acquired reflected signals, wherein, if there is a fault in the corresponding span, localization of the fault is determined based on the corresponding acquired reflected signals.

Here, the optical network can be a multi-span optical network. Further, the optical network is preferably a wavelength-division multiplexing (WDM) network, wherein the method can be used for any wavelength-division multiplexing network that makes use of one or several wavelength bands, irrespective of the network topology, for example point-to-point, ring, or meshed networks, with any combination of network nodes which use amplifiers with or without embedded variable optical attenuators, including terminal sites, fixed optical add-drop, reconfigurable optical add-drop multiplexer, or amplifier nodes.

Therein, a light wave propagating in an optical fiber experiences distributed reflections along the fiber axis due to Rayleigh backscattering and optical connections in the fiber span. Reflected power components are travelling back to the fiber input where they are detected by a corresponding power monitor. Therein, the power measured at the fiber input represents the total power of all components reflected back at different locations over the total length of the span, wherein in case of a fiber cut only power components reflected up to the location of the fiber cut are received at the fiber input. Thus, the total power acquired by the respective power monitor is smaller as compared with the power value measured before the traffic interruption.

Further, corresponding power monitors are usually already included in optical amplifiers to monitor power inputted in or outputted by the corresponding amplifier or can be installed at low costs.

Hence, the localization of a fault in a span can be determined accurately at comparatively low costs based on anyhow transmitted data signals, wherein no additional modulation has to be applied to light waves travelling in the span.

Furthermore, due to the correspondingly fast indication of the location of a fault, in particular a fiber or cable break, downtimes can be kept low and repair times can be minimized.

Thus, an improved method for fault localization in an optical network is provided.

In one embodiment, for each span, the step of respectively acquiring reflected signals generated by the optical signal travelling through the span by at least one power monitoring device of at least one of the corresponding associated amplifiers comprises respectively acquiring reflected signals generated by the optical signal travelling through the span by power monitoring devices installed at both ends of the span. Data transmission in optical networks is typically organized as bidirectional transmission, wherein a data stream and its counterdirectional counterpart are using the same optical path, but typically different fibers in the same cable. Thus, it can be assumed that traffic in both directions will be affected by a fault. Therefore, two measurement signals taken from both sides are available for characterizing a single fiber break and one can choose the signal providing higher accuracy.

Therein, the method can further comprise the steps of selecting data providing higher accuracy from data characterizing the reflected signals acquired by the power monitoring devices installed at both ends of the span and/or selecting a more accurate fault localization after determining separately the fault localization from the data received from each of the power monitoring devices installed at both ends of the span.

In particular, determining the localization of a fault can comprise determining the position of the fault with an accuracy that is at least sufficient to find the failure with usual means, but it may also comprise just determining to which of the fiber ends the fault is located more closely.

Further, the method can comprise the step of, for each span, computing more accurately reflected signals by removing the impact of reflections before the corresponding span from the detected reflected signals, and wherein, for each span, the step of determining whether there is a fault in the corresponding span based on the corresponding detected reflected signals, wherein, if there is a fault in the corresponding span, localization of the fault is determined based on the corresponding detected reflected signals, comprises determining whether there is a fault in the corresponding span based on the corresponding more accurately determined reflected signals, wherein, if there is a fault in the corresponding span, localization of the fault is determined based on the corresponding more accurately determined reflected signals.

Here, reflections before the corresponding span can for example be caused by patch panels, wherein the accuracy of the fault localization can be affected by these reflections. Further reflections may be caused by optical connections distributed along the optical span.

Thus, by removing the impact of these reflections, the accuracy of the fault localization can be further improved.

The method can further comprise the step of, for each span, separating the reflected signals generated by the signal travelling through the span from the optical signal travelling through the span by at least one separating device.

Here, the expression that the reflected signals generated by the signal travelling through the span is separated from the optical signal travelling through the span means that the reflected signal and the optical signal are at least in part guided through different optical fibers or waveguides after separation.

Thereby, the impact of the optical signal as such on the fault localization can be reduced.

The at least one separating device can comprise an optical circulator and/or at least one power splitter, preferably a 2x2 power splitter.

An optical circulator is a three- or four-port optical device designed such that light entering any port exits from the next.

A 2x2 power splitter is designed to enable each of two signals entering the splitter on two input fibers to be distributed among two output fibers.

These devices are already present in usual optical networks, for example commercial amplifiers offering gain and output power control, wherein these devices can simply be used here without requiring expensive modifications.

According to another embodiment of the invention, a system for fault localization in an optical network is provided, wherein the optical network includes at least one span, and wherein an optical signal travels through the at least one span, wherein each of the at least one span has associated amplifiers, wherein the associated amplifiers are connected to launch optical signals into a remainder of a corresponding optical transmission line, wherein, for each span, at least one power monitoring device is configured to acquire reflected signals generated by the optical signal travelling through the span, wherein the system further comprises at least one determining unit, wherein the at least one determining unit is configured to, for each span, determine whether there is a fault in the corresponding span based on the corresponding acquired reflected signals, and, if there is a fault in the corresponding span, determine the localization of the fault based on the corresponding acquired reflected signals.

Thus, an improved system for fault localization in an optical network is provided.

Therein, a light wave propagating in an optical fiber experiences distributed reflections along the fiber axis due to Rayleigh backscattering and optical connections in the fiber span. Reflected power components are travelling back to the fiber input where they are detected by a corresponding power monitoring device. Therein, the power measured at the fiber input represents the total power of all components reflected back at different locations over the total length of the span, wherein in case of a fiber cut only power components reflected up to the location of the fiber cut are received at the fiber input. Thus, the total power acquired by the respective power monitoring device is smaller as compared with the power value measured before the traffic interruption. Further, corresponding power monitoring devices are usually already included in optical amplifiers to monitor power inputted in or outputted by the corresponding amplifier or can be installed at low costs. Therefore, the localization of a fault in a span can be determined accurately at comparatively low costs based on anyhow transmitted data signals, wherein no additional modulation has to be applied to light waves travelling in the span. Furthermore, due to the correspondingly fast indication of the location of a fault, in particular a fiber or cable break, downtimes can be kept low and repair times can be minimized.

In one embodiment, for each span, power monitoring devices installed at both ends of the span are respectively configured to acquire reflected signals generated by the optical signal travelling through the span. Data transmission in optical networks is typically organized as bidirectional transmission, wherein a data stream and its counterdirectional counterpart are using the same optical path, but typically different fibers in the same cable. Thus, it can be assumed that traffic in both directions will be affected by a fault. Therefore, two measurement signals taken from both sides are available for characterizing a single fiber break and one can choose the signal providing higher accuracy.

Therein, the determining unit can receive data characterizing the reflected signals acquired by the power monitoring devices installed at both ends of the span and be configured to select the data providing higher accuracy and/or be configured to select the more accurate fault localization after determining separately the fault localization from the data received from each of the power monitoring devices installed at both ends of the span.

In particular, determining the localization of a fault can comprise determining the position of the fault with an accuracy that is at least sufficient to find the failure with usual means, but it may also comprise just determining to which of the fiber ends the fault is located more closely.

Further, the system can comprise at least one computing unit, wherein the at least one computing unit is configured to, for each span, compute more accurately reflected signals by removing the impact of reflections before the corresponding span from the acquired reflected signals, and wherein the at least one determining unit is configured to, for each span, determine whether there is a fault in the corresponding span based on the corresponding more accurately determined reflected signals, and, if there is a fault in the corresponding span, determine the localization of the fault based on the corresponding more accurately determined reflected signals. Therein, by removing the impact of these reflections, the accuracy of the fault localization can be further improved.

Therein, each span can further comprise at least one separating device, wherein the at least one separating device is configured to separate the reflected signals generated by the signal travelling through the span from the optical signal travelling through the span. Thereby, the impact of the optical signal as such on the fault localization can be reduced.

The at least one separating device can again comprise an optical circulator and/or at least one power splitter, preferably a 2x2 power splitter. These devices are already present in usual optical networks, for example commercial amplifiers offering gain and output power control, wherein these devices can simply be used here without requiring expensive modifications.

According to still another embodiment of the invention, an optical network is provided, wherein the optical network includes at least one span, and wherein an optical signal travels through the at least one span, wherein each of the at least one span has associated amplifiers, wherein the associated amplifiers are connected to launch optical signals into a remainder of a corresponding optical transmission line, and wherein the optical network further comprises a system for fault localization in an optical network as described above.

Thus, an optical network is provided that comprises an improved system for fault localization in an optical network. Therein, a light wave propagating in an optical fiber experiences distributed reflections along the fiber axis due to Rayleigh backscattering and optical connections in the fiber span. Reflected power components are travelling back to the fiber input where they are detected by a corresponding power monitoring device. Therein, the power measured at the fiber input represents the total power of all components reflected back at different locations over the total length of the span, wherein in case of a fiber cut only power components reflected up to the location of the fiber cut are received at the fiber input. Thus, the total power acquired by the respective power monitoring device is smaller as compared with the power value measured before the traffic interruption. Further, corresponding power monitoring devices are usually already included in optical amplifiers to monitor power inputted in or outputted by the corresponding amplifier or can be installed at low costs. Therefore, the localization of a fault in a span can be determined accurately at comparatively low costs based on anyhow transmitted data signals, wherein no additional modulation has to be applied to light waves travelling in the span. Furthermore, due to the correspondingly fast indication of the location of a fault, in particular a fiber or cable break, downtimes can be kept low and repair times can be minimized.

The invention will now be described in further detail with reference to the attached drawings.

Figure 1      illustrates a flowchart of a method for fault localization in an optical network according to embodiments of the invention;

Figure 2A      illustrates the steps of determining whether there is a fault in the corresponding span based on the corresponding acquired reflected signals, in case there is no fault;

Figure 2B      illustrates the step of determining whether there is a fault in the corresponding span based on the corresponding acquired reflected signals, in case there is a fault;

Figure 3    illustrates a system for fault localization in an optical network according to embodiments of the invention.

Figure 4    illustrates the setup of a power monitoring device using an optical circulator as separating device.

Figure 5    illustrates the setup of a power monitoring device using an optical coupler as separating device.

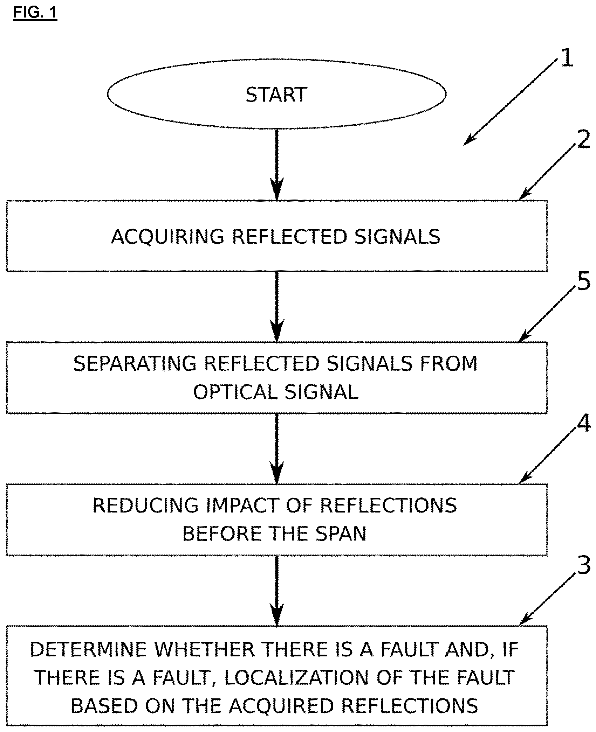

Figure 1 illustrates a flowchart of a method for fault localization in an optical network 1 according to embodiments of the invention.

In particular, Fig. 1 illustrates a method for fault localization in an optical network 1, wherein the optical network includes at least one span, and wherein an optical signal travels through the at least one span, wherein each span has associated amplifiers, wherein the associated amplifiers are connected to launch optical signals into a remainder of a corresponding optical transmission line.

Meshed optical networks usually comprise many spans that are embedded between amplifiers placed at both ends of the span. Each of these amplifiers is further usually equipped with power monitoring devices at its input and its output.

Further, knowing the exact position of a fiber break is very advantageous, since this allows the corresponding repair team to directly travel to the corresponding place, whereby the time of repair can be kept at a minimum. Thereby, the availability of services offered over the network can be further increased. However, it is already beneficial to know which of the ends of the span is closer to a fiber break.

It is known to determine the location of a fiber break using mobile optical time domain reflectometers (OTDR). Therein, in case a traffic interruption is detected, a repair team moves to one of the terminal locations of a span and records a trace of the fiber span with a mobile OTDR. However, if the fiber break is not located equidistantly from both ends of the span, the choice of the terminal location that is used for the OTDR measurement is important regarding the total repair time.

The method 1 shown in Fig. 1 comprises a step 2 of, for each span, respectively acquiring reflected signals generated by the optical signal travelling through the span by at least one power monitoring device, and a step 3 of, for each span, determining whether there is a fault in the corresponding span based on the corresponding acquired reflected signals, wherein, if there is a fault in the corresponding span, localization of the fault is determined based on the corresponding acquired reflected signal.

Therein, a light wave propagating in an optical fiber experiences distributed reflections along the fiber axis due to Rayleigh backscattering and optical connections in the fiber span. Reflected power components are travelling back to the fiber input where they are detected by a corresponding power monitoring device. Therein, the power measured at the fiber input represents the total power of all components reflected back at different locations over the total length of the span, wherein in case of a fiber cut only power components reflected up to the location of the fiber cut are received at the fiber input. Thus, the total power acquired by the respective power monitoring devices is smaller as compared with the power value measured before the traffic interruption.

Further, corresponding power monitoring devices are usually already included in optical amplifiers to monitor power inputted in or outputted by the corresponding amplifier or can be installed at low costs.

Therefore, the localization of a fault in a span can be determined accurately at comparatively low costs based on anyhow transmitted data signals, wherein no additional modulation has to be applied to light waves travelling in the span.

Furthermore, due to the correspondingly fast indication of the location of a fault, in particular a fiber or cable break, downtimes can be kept low and repair times can be minimized.

Thus, an improved method for fault localization in an optical network 1 is provided.

Therein, the expression "localization" has to be interpreted in a broad sense. This expression may indicate that the position of a fiber break is determined with an accuracy that is at least sufficient to find the failure with usual means, but it may also indicate that it is just determined to which of the fiber ends the fiber break is located more closely. Furthermore, the term "signals" refers to power components or light waves propagating in an optical waveguide, e.g. an optical fiber.

The expression "light wave" refers to an electromagnetic wave with a wavelength in the range from 400nm to 2000nm.

In particular, the basic idea of the shown method 1 is to derive the location of a fiber break from power readings determined before and during the fiber break.

Therein, a power monitoring device for acquiring reflected signals generated by the optical signal travelling through the span can for example be placed at the input of the span, wherein power reflected back to the fiber input by Rayleigh backscattering can be described by the following equation:

$$P_{\text{refl}|\text{Rayleigh}} = P_{\text{in}} \cdot \gamma_{\text{Rayleigh}}/2\alpha_{\text{Np}} * [ 1 - e^{-2\alpha_{\text{Np}}L} ] \qquad\qquad (1),$$

wherein $P_{in}$ is the input power launched into the fiber, $L$ is the length of the fiber and $\gamma_{Rayleigh}$ is the Rayleigh backscattering coefficient.

Further, the attenuation coefficient $\alpha_{Np}$ is linked to the attenuation coefficient $\alpha_{dB}$ in decibel per distance according to the following equation:

$$\alpha_{Np} = \ln(10)/10 * \alpha_{dB} \tag{2}$$

Therefore, the power levels $P_{op}$ and $P_{Cut}$ detected during normal operation, respectively after a cut, respectively break, are given by the following equations:

$$P_{op} = P_{in} \cdot \gamma_{Rayleigh}/2\alpha_{Np} * [1 - e^{-2\alpha_{Np}L_{fiber}}] \tag{3}$$

$$P_{cut} = P_{in} \cdot \gamma_{Rayleigh}/2\alpha_{Np} * [1 - e^{-2\alpha_{Np}L_{cut}}] \tag{4},$$

wherein $L_{fiber}$ is the length of the total fiber, and wherein $L_{cut}$ is the length, respectively distance, from the input of the span until the cut.

Thus, the ratio of the power levels $R_{power}$ can be expressed by the equation

$$R_{power} = P_{cut}/ P_{op} = (P_{in} \cdot \gamma_{Rayleigh}/2\alpha_{Np} * [1 - e^{-2\alpha_{Np}L_{cut}}]) / (P_{in} \cdot \gamma_{Rayleigh}/2\alpha_{Np} * [1 - e^{-2\alpha_{Np}L_{fiber}}]) \tag{5}$$

and is the smaller the closer the fiber cut is to the fiber input.

For each span, the step of respectively acquiring reflected signals generated by the optical signal travelling through the span by at least one power monitoring device can also comprise respectively acquiring reflected signals generated by the optical signal travelling through the span by power monitoring devices installed at both ends of the span, in order to further increase the accuracy.

As shown in Fig. 1, the method 1 further comprises the step 4 of, for each span, computing more accurately reflected signals by removing the impact of reflections before the corresponding span from the acquired reflected signals, wherein, for each span, the step 3 of determining whether there is a fault in the corresponding span based on the corresponding acquired reflected signals, wherein, if there is a fault in the corresponding span, localization of the fault is determined based on the corresponding acquired reflected signals, comprises determining whether there is a fault in the corresponding span based on the corresponding more accurately determined reflected signals, wherein, if there is a fault in the corresponding span, localization of the fault is determined based on the corresponding more accurately determined reflected signals.

The reflections before the corresponding span are known from the OTDR traces taken when installing the optical network, wherein their impact can be removed by taken this known information, removing it from the acquired reflected signals and correspondingly adopting the equations described above.

According to the embodiments of Fig. 1, the method 1 further comprises the step 5 of, for each span, separating the reflected signals generated by the signal travelling through the span from the optical signal travelling through the span by at least one separating device.

Therein, the at least one separating device can comprise an optical circulator and/or at least one power splitter, preferably a 2x2 power splitter.

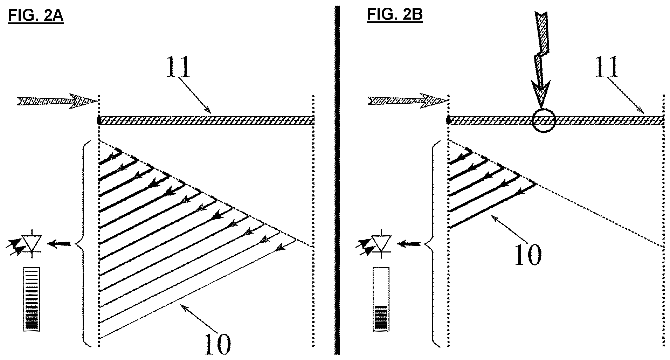

Figure 2A illustrates the step of determining whether there is a fault in the corresponding span based on the corresponding acquired reflected signals, in case there is no fault.

In particular, Fig. 2A illustrates the power 10 reflected back to the fiber input by Rayleigh backscattering in case of an intact fiber 11.

In this case, as shown in Fig. 2A, power components reflected over the whole length of the fiber are received at the fiber input.

Figure 2B illustrates the step of determining whether there is a fault in the corresponding span based on the corresponding acquired reflected signals, in case there is a fault.

In particular, Fig. 2B illustrates the power 10 reflected back to the fiber input by Rayleigh backscattering in case of a fiber cut.

In this case, as shown in Fig. 2B. only power components reflected up to the location of the fiber cut are received at the fiber input. Thus, the total power acquired by the respective power monitoring device is smaller as compared with the power value acquired before the traffic interruption.

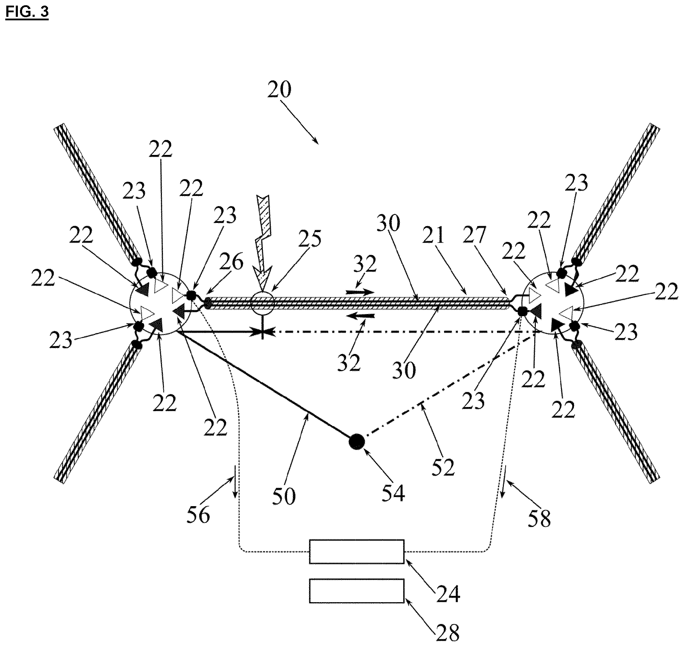

Figure 3 illustrates a system for fault localization in an optical network 20 according to embodiments of the invention.

In particular, Fig. 3 illustrates a system for fault localization in an optical network 20, wherein the optical network includes at least one span 21, and wherein an optical signal travels through the at least one span, wherein each span 21 has associated amplifiers 22, wherein the associated amplifiers 22 are connected to launch optical signals into a remainder of a corresponding optical transmission line.

In the embodiment shown, all links of the optical network 20 are configured for bidirectional operation. Therefore, each span 21 comprises at least two fibers 30, wherein one of the fibers is transmitting signals 32 in one direction and the other fiber is transmitting signals 32 in the opposite direction. Bidirectional transmission helps to increase the accuracy of the technique described, but is not a mandatory requirement for using the technique.

The optical network can be understood as an optical system with a single span 21.

Therein, for each span 21, at least one power monitoring device 23 is configured to acquire reflected signals generated by reflections generated by the optical signal travelling through the span 21, wherein the system 20 further comprises at least one determining unit 24, wherein the at least one determining unit 24 is configured to, for each span 21, determine whether there is a fault 25 in the corresponding span 21 based on the corresponding acquired reflected signals, and, if there is a fault 25 in the corresponding span 21, determine the localization of the fault 25 based on the corresponding acquired reflected signals.

Therein, the optical network can be an optical mesh network and the amplifiers can be erbium-doped fiber amplifiers with integrated power monitoring devices.

The at least one determining unit can further for example be realized based on code that is stored in a memory and executable by a processor.

As shown in Fig. 3, according to the embodiments of Fig. 3, for each span 21, power monitoring devices 23 installed at both ends 26, 27 of the span 21 are respectively configured to acquire reflected signals generated by the optical signal travelling through the span 21.

Providing data 56 about acquired reflected signals from the power monitoring device 23 at one of the fiber ends 26 to the determining unit 24 is sufficient for providing the described functionality, but using additional data 58 about acquired reflected signals from the further power monitoring device 23 at the other fiber end 27 to the determining unit 24 helps to improve accuracy. For example, the determining unit 24 can select from the power ratios determined from data provided by the two power monitoring devices 23 the one providing higher accuracy.

As further shown in Fig. 3, the optical system 20 further comprises at least one computing unit 28, wherein the at least one computing unit 28 is configured to, for each span 21, compute more accurately reflected signals by removing the impact of reflections before the corresponding span 21 from the acquired reflected signals, wherein the at least one determining unit 24 is configured to, for each span 21, determine whether there is a fault 25 in the corresponding span 21 based on the corresponding more accurately determined reflected signals, and, if there is a fault 25 in the corresponding span 21, determine the localization of the fault 25 based on the corresponding more accurately determined reflected signals.

The at least one computing unit can again for example be realized based on code that is stored in a memory and executable by a processor.

Localizing the fiber cut with an OTDR requires the repair team to move to one of the fiber ends 26 or 27. Once the fiber cut has been localized, the repair team needs to travel from the respective fiber end 26, 27 to the location of the fiber cut. As illustrated in Fig. 3, travel route 50 including fiber end 26 for traveling from the start position 54 of the repair team to the location of the fiber cut 25 is shorter than travel route 52 including fiber end 27. Thus, traveling via route 50 results in shorter repair time. The above-described method can therefore be used for identifying the best suited fiber end for determining the exact fault location with a mobile OTDR.

The shown system 20 is further configured to execute a method for fault localization in an optical network as described above.

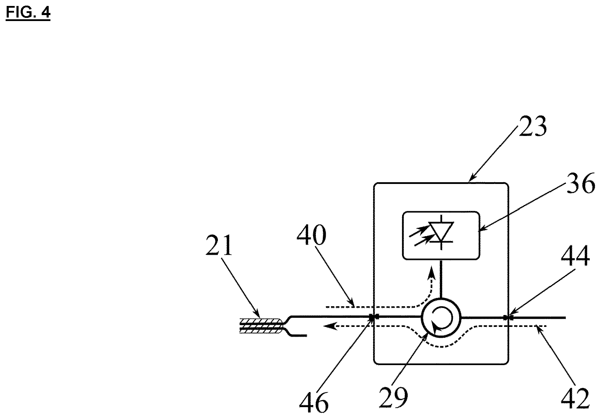

Fig. 4 illustrates the setup of a power monitoring device using an optical circulator as separating device.

In particular, Fig. 4 illustrates a power monitoring device 23 receiving at port 44 an optical signal 42 to be transferred via port 46 to the optical span 21. At port 46, the power monitoring device 23 also receives reflected power from the span 21. There is further shown a separating device 29, wherein the separating device 29 is respectively configured to separate the reflected signal 40 generated by the signal travelling through the span 21 from the optical signal 42 travelling through the span 21. The power monitoring device 29 furthermore comprises a power monitoring device, respectively a power monitor 36 connected to the separating device 29 and configured to receive the reflected signal 40, wherein power monitor 36 can have a simpler setup than power monitoring device 23 and can for example be a photodiode.

The separating devices 29 respectively are optical circulators or fiber optical couplers, wherein Fig. 4 shows an embodiment using an optical circulator.

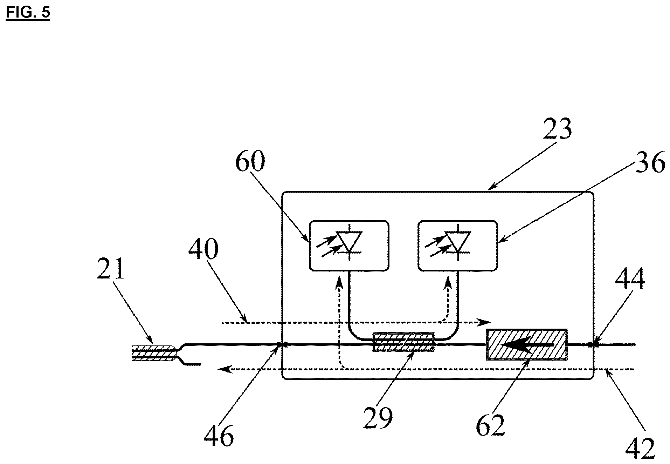

An embodiment making use of an optical coupler as separating device 29 is illustrated in Fig. 5.

Fig. 5 illustrates the setup of a power monitoring device using an optical coupler as separating device.

Therein, the separating device 29 branches off part of the optical signal 42 traveling through the span 21 and directs this part to power monitor 60 for measuring the power launched into the span 21. Furthermore, the separating device 29 branches off part of the reflected signal 40 generated from the optical signal 42 traveling through the optical signal and directs this part to power monitor 36 for determining the reflected power. The remaining part of the reflected signal 44 generated from the optical signal 42 is blocked by an optical isolator 62 such that it does not further propagate into an optical amplifier connected to port 44 of the power monitoring device 23 or to the remaining part of the amplifier comprising the power monitoring device 23.

Typical optical amplifiers 22 already comprise an isolator 62 and an optical coupler at their output. Thus, it is sufficient for implementing the above-described method to add a further power monitoring device, respectively power monitor 60, for measuring reflected power. In addition, some commercial amplifiers already include this power monitoring devices such that the method can be implemented with almost no additional cost or even without additional cost.

Reference signs

| | |
|---|---|
| 1 | method |
| 2 | method step |
| 3 | method step |
| 4 | method step |
| 5 | method step |
| 10 | power |
| 11 | fiber |
| 20 | optical network or system |
| 21 | span |
| 22 | amplifier |
| 23 | power monitoring device |
| 24 | determining unit |
| 25 | fault |
| 26 | end |
| 27 | end |
| 28 | computing unit |
| 29 | separating device |
| 30 | optical fiber |
| 32 | signals |
| 36 | power monitor |
| 40 | reflected signal |
| 42 | signal transmitted over span |
| 44 | device port |
| 46 | device port |
| 50 | travel route |
| 52 | travel route |
| 54 | start position |
| 56 | data about acquired reflected signals |
| 58 | data about acquired reflected signals |
| 60 | power monitor |
| 62 | isolator |

**Claims**

1. Method for fault localization in an optical network, wherein the optical network includes at least one span, and wherein an optical signal travels through the at least one span, wherein each of the at least one span has associated amplifiers, wherein the associated amplifiers are connected to launch optical signals into a remainder of a corresponding optical transmission line, wherein the method (1) comprises the steps of:

   - for each span, respectively acquiring reflected signals generated by the optical signal travelling through the span by at least one power monitoring device (2); and
   - for each span, determining whether there is a fault in the corresponding span based on the corresponding acquired reflected signals, wherein, if there is a fault in the corresponding span, localization of the fault is determined based on the corresponding acquired reflected signals (3).

2. Method according to claim 1, wherein, for each span, the step of respectively acquiring reflected signals generated by the optical signal travelling through the span by at least one power monitoring device (2) comprises respectively acquiring reflected signals caused by the optical signal travelling through the span by power monitoring devices installed at both ends of the span.

3. Method according to claim 2, wherein the method further comprises the steps of selecting data providing higher accuracy from data characterizing the reflected signals acquired by the power monitoring devices installed at both ends of the span and/or selecting a more accurate fault location after determining separately the fault location from the data received from each of the power monitoring devices installed at both ends of the span.

4. Method according to one of claims 1 to 3, wherein method (1) further comprises the step of, for each span, computing more accurately reflected signals by removing the impact of reflections before the corresponding span from the acquired reflected signals (4), and wherein, for each span, the step of determining whether there is a fault in the corresponding span based on the corresponding acquired reflected signals, wherein, if there is a fault in the corresponding span, localization of the fault is determined based on the corresponding acquired reflected signals (3), comprises determining whether there is a fault in the corresponding span based on the corresponding more accurate reflected signals, wherein, if there is a fault in the corresponding span, localization of the fault is determined based on the corresponding more accurate reflected signals.

5. Method according to one of claims 1 to 4, wherein the method (1) further comprises the step (5) of, for each span, separating the reflected signals generated by the signal travelling through the span from the optical signal travelling through the span by at least one separating device (29).

6. Method according to claim 5, wherein the at least one separating device (29) comprises an optical circulator and/or a power splitter.

7. System for fault localization in an optical network, wherein the optical network includes at least one span (21), and wherein an optical signal travels through the at least one span (21), wherein each of the at least one span (21) has associated amplifiers (22), wherein the associated amplifiers (22) are connected to launch optical signals into a remainder of a corresponding optical transmission line, wherein, for each span (21), at least one power monitoring device (23) is configured to acquire reflected signals generated by the optical signal travelling through the span (21), wherein the system (20) further comprises at least one determining unit (24), wherein the at least one determining unit (24) is configured to, for each span (21), determine whether there is a fault (25) in the corresponding span (21) based on the corresponding acquired reflected signals, and, if there is a fault (25) in the corresponding span, determine the localization of the fault (25) based on the corresponding acquired reflected signals.

8. System according to claim 7, wherein, for each span (21), power monitoring devices (23) installed at both ends (26, 27) of the span (21) are respectively configured to acquire reflected signals caused by the optical signal travelling through the span (21).

9. System according to claim 8, wherein the determining unit (24) receives data characterizing the reflected signals acquired by the power monitoring devices (23) installed at both ends (26, 27) of the span (21) and is configured to select the data providing higher accuracy and/or is configured to select the more accurate fault localization after determining separately the fault localization from the data received from each of the power monitoring devices (23) installed at both ends (26, 27) of the span (21).

10. System according to one of claims 7 to 9, wherein the system (20) further comprises at least one computing unit (28), wherein the at least one computing unit (28) is configured to, for each span (21), compute more accurately reflected signals by removing the impact of reflections before the corresponding span (21) from the acquired reflected signals, and wherein the at least one determining unit (24) is configured to, for each span (21), determine whether there is a fault (25) in the corresponding span (21) based on the corresponding more accurate reflections, and, if there is a fault (25) in the corresponding span (21), determine the localization of the fault (25) based on the corresponding more accurate reflections.

11. System according to one of claims 7 to 10, wherein each span (21) further comprises at least one separating device (29), wherein the at least one separating device (29) is configured to separate the reflected signals generated by the signal travelling through the span (21) from the optical signal travelling through the span (21).

12. System according to claim 11, wherein the at least one separating device (29) comprises an optical circulator and/or a power splitter.

13. Optical network, wherein the optical network includes at least one span (21), and wherein an optical signal travels through the at least one span (21), wherein each of the at least one span (21) has associated amplifiers (22), wherein the associated amplifiers (22) are connected to launch optical signals into a remainder of a corresponding optical transmission line, and wherein the optical network further comprises a system for fault localization in an optical network (20) according to one of claims 7 to 12.

FIG. 1

```
              ┌─────────────┐
              │    START    │ ─────────→ 1
              └──────┬──────┘
                     │
                     ▼
   ┌──────────────────────────────────────┐
   │      ACQUIRING REFLECTED SIGNALS      │ ──→ 2
   └──────────────────┬───────────────────┘
                      │
                      ▼
   ┌──────────────────────────────────────┐
   │   SEPARATING REFLECTED SIGNALS FROM   │ ──→ 5
   │            OPTICAL SIGNAL             │
   └──────────────────┬───────────────────┘
                      │
                      ▼
   ┌──────────────────────────────────────┐
   │    REDUCING IMPACT OF REFLECTIONS     │ ──→ 4
   │            BEFORE THE SPAN            │
   └──────────────────┬───────────────────┘
                      │
                      ▼
   ┌──────────────────────────────────────┐
   │ DETERMINE WHETHER THERE IS A FAULT AND, IF │ ──→ 3
   │ THERE IS A FAULT, LOCALIZATION OF THE FAULT │
   │   BASED ON THE ACQUIRED REFLECTIONS   │
   └──────────────────────────────────────┘
```

FIG. 2A

11

10

FIG. 2B

11

10

FIG. 3

FIG. 4

FIG. 5

Europäisches
Patentamt
European
Patent Office
Office européen
des brevets

# EUROPEAN SEARCH REPORT

**Application Number**

EP 24 15 8819

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2014/055777 A1 (ARCHAMBAULT JEAN-LUC [US] ET AL) 27 February 2014 (2014-02-27) * figures 1, 2, 4 * * paragraphs [0015] - [0021], [0027], [0030] - [0032] * * claim 1 * | 1-13 | INV. H04B10/071 G01M11/00 |
| X | US 11 652 545 B2 (CIENA CORP [US]) 16 May 2023 (2023-05-16) | 1,5-7, 11-13 | |
| A | * figure 3 * * column 7, lines 13-67 * | 4,10 | |
| X | US 2017/346550 A1 (VON DER WEID JEAN PIERRE [BR] ET AL) 30 November 2017 (2017-11-30) * figures 2, 3 * * paragraphs [0030] - [0033] * | 1-13 | |
| A | US 2002/131099 A1 (HARASAWA SHIN-ICHIROU [JP]) 19 September 2002 (2002-09-19) * the whole document * | 1-13 | **TECHNICAL FIELDS SEARCHED (IPC)** H04B G01M |

The present search report has been drawn up for all claims

| Place of search | Date of completion of the search | Examiner |
|---|---|---|
| Munich | 20 June 2024 | Lobato Polo, I |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 15 8819

This annex lists the patent family members relating to the patent documents cited in the above-mentioned European search report.
The members are as contained in the European Patent Office EDP file on
The European Patent Office is in no way liable for these particulars which are merely given for the purpose of information.

20-06-2024

| Patent document cited in search report | | Publication date | Patent family member(s) | | Publication date |
|---|---|---|---|---|---|
| US 2014055777 | A1 | 27-02-2014 | CN 103634045 A | | 12-03-2014 |
| | | | EP 2701248 A2 | | 26-02-2014 |
| | | | US 2014055777 A1 | | 27-02-2014 |
| US 11652545 | B2 | 16-05-2023 | NONE | | |
| US 2017346550 | A1 | 30-11-2017 | BR 112015004234 A2 | | 22-08-2017 |
| | | | EP 3248303 A1 | | 29-11-2017 |
| | | | US 2017346550 A1 | | 30-11-2017 |
| | | | WO 2016118053 A1 | | 28-07-2016 |
| US 2002131099 | A1 | 19-09-2002 | EP 1241805 A2 | | 18-09-2002 |
| | | | JP 3696517 B2 | | 21-09-2005 |
| | | | JP 2002280978 A | | 27-09-2002 |
| | | | US 2002131099 A1 | | 19-09-2002 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 10142016 B2